# EUROPÄISCHE PATENTSCHRIFT

(11) **EP 3 616 295 B1**
(45) Veröffentlichungstag und Bekanntmachung des Hinweises auf die Patenterteilung: **24.11.2021**
(21) Anmeldenummer: 18716622.8
(22) Anmeldetag: 11.04.2018
(51) Int. Cl.: H02J 7/00, B60L 53/14, B60L 53/20, B60L 58/19

(54) **SCHALTUNGSANORDNUNG UND LADEVERFAHREN FÜR EIN ELEKTRISCHES ENERGIESPEICHERSYSTEM**
CIRCUIT AND CHARGING METHOD FOR AN ELECTRICAL ENERGY STORAGE SYSTEM
CIRCUIT ET PROCÉDÉ DE CHARGE POUR UN SYSTÈME DE STOCKAGE D'ÉNERGIE ÉLECTRIQUE

(30) Priorität: 24.04.2017 DE 102017206834
(43) Veröffentlichungstag der Anmeldung: 04.03.2020
(73) Patentinhaber: Robert Bosch GmbH, 70442 Stuttgart (DE)
(72) Erfinder: KRIEG, Berengar, 70839 Gerlingen (DE); FRIEDRICH, Marco, 71638 Ludwigsburg (DE)
(86) Internationale Anmeldenummer: PCT/EP2018/059215
(87) Internationale Veröffentlichungsnummer: WO 2018/197206

(56) Entgegenhaltungen:
- EP-A1- 2 810 815
- DE-A1-102011 089 648
- DE-A1-102014 004 790
- DE-A1-102016 008 052

## Beschreibung

### Feld der Erfindung

Die vorliegende Erfindung bezieht sich auf eine Schaltungsanordnung und ein Ladeverfahren für ein elektrisches Energiespeichersystem gemäß dem Oberbegriff der unabhängigen Patentansprüche.

### Stand der Technik

In heutigen elektrisch angetriebenen Fahrzeugen, insbesondere Elektrofahrzeugen (EV) oder Hybridfahrzeugen (HEV), sind Batteriemodule durch Parallel- und Reihenschaltung von Einzelbatteriezellen aufgebaut, die im Fahrzeug nach außen als ein Batteriepack wirken. Das Batteriepack hat eine Nennspannung, die abhängig von Ladezustand und Belastung des Batteriepacks den Spannungsbereich für Lade- und Entladevorgänge definiert.

Das Laden von elektrisch angetriebenen Fahrzeugen, insbesondere von Fahrzeugen mit Batterie als Hauptenergiequelle, ist heutzutage Gegenstand intensiver Forschung und Entwicklung. Zum einen liegt dies daran, dass gegenwärtige Ladezeiten für eine vollständige Batterieladung noch sehr lang sind, und zum anderen wird die Kapazität zukünftiger Speicher eher noch zunehmen, sodass in naher Zukunft im Fahrzeug verbaute elektrische Energiespeichersysteme mit Kapazitäten von mehr als 50 kWh zum Einsatz kommen werden. Gleichzeitig sind für eine breitere Akzeptanz dieser Fahrzeuge kürzere Ladezeiten, möglichst vergleichbar mit den Verweilzeiten beim Tankvorgang von Fahrzeugen mit Verbrennungsmotor, wünschenswert.

Bedingt durch technische Standards, verfügbare Bauteile und Technologien sowie Wirkungsgradanforderungen ist eine normale Betriebsspannung des Fahrzeugantriebsstranges derzeit beschränkt auf Werte von typischerweise 300 V bis 450 V bei rein elektrisch angetriebenen Fahrzeugen. Standardkonforme Ladestecker sind typischerweise für Nennströme bis 200 A zertifiziert, wobei die Ladespannung für Gleichspannungsladen typischerweise zwischen 200 V bis 850 V liegen kann. Durch Kommunikation zwischen Energiespeichersystem und Ladeeinrichtung kann ladeeinrichtungsseitig im Rahmen gewisser Grenzen eine stufenlose Regelung von Ladespannung und Ladestrom erfolgen.

Heutzutage verfügbare elektrische Energiespeichersysteme, insbesondere Batteriesysteme, bieten jedoch keine Möglichkeit, die Spannung beim Laden anzupassen, da ihre Verschaltung, beispielsweise in Reihen- oder Parallelschaltung, fest verdrahtet ist, und gleichzeitig die antriebsseitig vorhandenen Komponenten, beispielsweise den Inverter, auf dem normalen Betriebsspannungsniveau weiter zu betreiben.

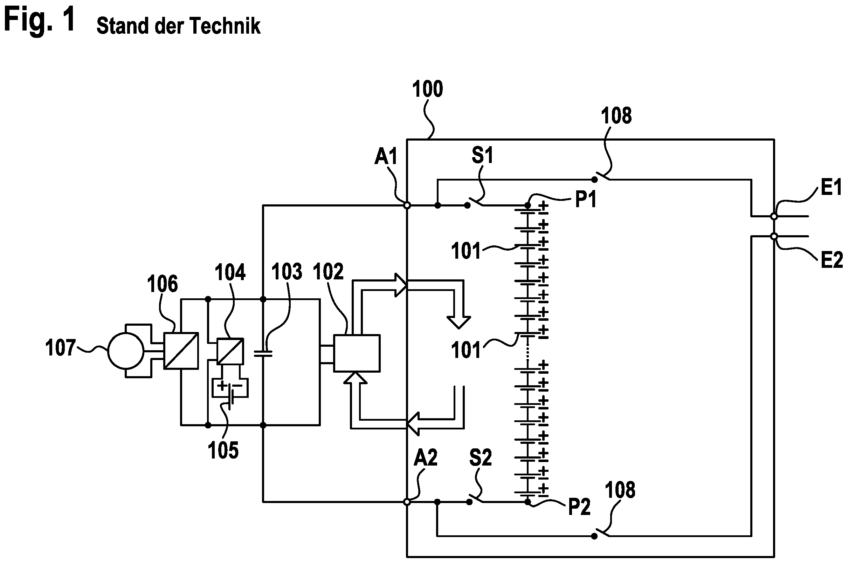

Ein Beispiel für eine Schaltungsanordnung gemäß dem Stand der Technik zeigt Figur 1: Eine Gleichspannungsladeeinrichtung ist mit einem Batteriesystem mittels Schaltelementen trennbar elektrisch leitend verbunden. Zwischen dem Batteriesystem und zumindest einem Verbraucher sind weitere Schaltelemente angeordnet, so dass das Batteriesystem mittels der weiteren Schaltelemente mit dem Verbraucher elektrisch leitend verbindbar ist. Bei Nichtnutzung des Verbrauchers sind das Batteriesystem und der Verbraucher mittels der weiteren Schaltelemente elektrisch trennbar.

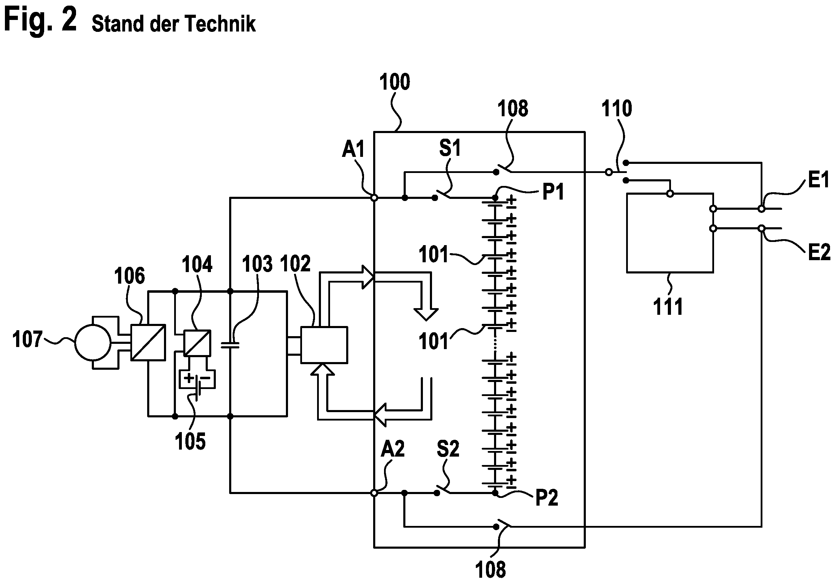

Ein weiteres Beispiel für eine Schaltungsanordnung gemäß dem Stand der Technik zeigt Figur 2: Eine Anpassung der Ladespannung von der Gleichspannungsladeeinrichtung ist mittels eines Spannungswandlers zwischen der Gleichspannungsladeeinrichtung und dem Batteriesystem ermöglicht. Dieser Spannungswandler wird in einem von dem Batteriesystem gespeisten elektrisch angetriebenen Fahrzeug angeordnet.

DE 103 30 834 A1 zeigt ein Verfahren und eine Vorrichtung zur Versorgung wenigstens einer Last bei Netzausfall.

WO 2011/105794 offenbart ein hybrides Zellsystem mit einem seriellen Schaltkreis, dessen Sekundärzellen sowohl seriell als auch parallel geschaltet werden können.

DE10 2012 219 488 A1 zeigt eine Schaltungsanordnung und ein Verfahren zum

Vorladen eines kapazitiven Bauelements.

DE 10 2014 004790 A1 offenbart die Zusammenschaltung zweier Energiezellen wie in Abbildung 3 dargestellt.

DE 10 2016 008052 A1 und DE 10 2011 089648 A1 offenbaren Details zum Wechsel zwischen Serien- und Parallelbetrieb zweier Energiezellen.

EP 2 810 815 A1 zeigt die Verwendung eines DC/DC-Wandlers in Kombination mit Energiezellen.

### Offenbarung der Erfindung

Die erfindungsgemäße Schaltungsanordnung für ein elektrisches Energiespeichersystem ist in Anspruch 1 definiert.

Anspruch 3 definiert ein entsprechendes Ladeverfahren für ein elektrisches Energiespeichersystem mit einer Schaltungsanordnung nach Anspruch 1.

Anspruch 6 definiert ein elektrisches Energiespeichersystem mit einer Schaltungsanordnung nach Anspruch 1.

Anspruch 7 definiert die Verwendung einer Schaltungsanordnung nach Anspruch 1 in einem elektrisch angetriebenen Fahrzeug oder in einem Hybridfahrzeug.

Weitere vorteilhafte Ausführungsformen werden in den abhängigen Ansprüchen 2, 4 und 5 definiert.

Hintergrund der Erfindung ist, dass das Fahrzeug mittels verschiedener Gleichspannungsquellen geladen werden kann. Somit ist die Verfügbarkeit von Ladestationen für das Fahrzeug verbessert.

Die Schaltelemente können beispielsweise als Halbleiterschaltelemente, beispielsweise als MOSFETs oder IGBTs, aber auch als elektromechanische Relais oder Schütze ausgeführt werden.

Unter einer elektrischen Energiespeichereinheit kann insbesondere eine elektrochemische Batteriezelle und/oder ein Batteriemodul mit mindestens einer elektrochemischen Batteriezelle und/oder ein Batteriepack mit mindestens einem Batteriemodul verstanden werden. Zum Beispiel kann die elektrische Energiespeichereinheit eine Lithium-Batteriezelle oder ein Lithium-Batteriemodul oder ein Lithium-Batteriepack sein. Insbesondere kann die elektrische Energiespeichereinheit eine Lithium-Ionen-Batteriezelle oder ein Lithium-Ionen-Batteriemodul oder ein Lithium-Ionen-Batteriepack sein. Weiterhin kann die Batteriezelle vom Typ Lithium-Polymer-Akkumulator, Nickel-Metallhydrid-Akkumulator, Blei-Säure-Akkumulator, Lithium-Luft-Akkumulator oder Lithium-Schwefel-Akkumulator beziehungsweise ganz allgemein ein Akkumulator beliebiger elektrochemischer Zusammensetzung sein.

### Kurze Beschreibung der Zeichnungen

Es zeigen:
- Fig. 1: eine Schaltungsanordnung eines elektrischen Energiespeichersystems gemäß dem Stand der Technik;
- Fig. 2: eine weitere Schaltungsanordnung eines elektrischen Energiespeichersystems gemäß dem Stand der Technik;
- Fig. 3: eine beispielhafte Schaltungsanordnung eines elektrischen Energiespeichersystems außerhalb des Schutzanspruches;

- Fig. 4: eine erfindungsgemäße Schaltungsanordnung eines elektrischen Energiespeichersystems gemäß einer Ausführungsform und
- Fig. 5: ein Flussdiagramm eines erfindungsgemäßen Ladeverfahrens für ein elektrisches Energiespeichersystem.

### Ausführungsformen der Erfindung

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Gleiche Bezugszeichen bezeichnen in allen Figuren gleiche Vorrichtungskomponenten beziehungsweise Verfahrensschritte.

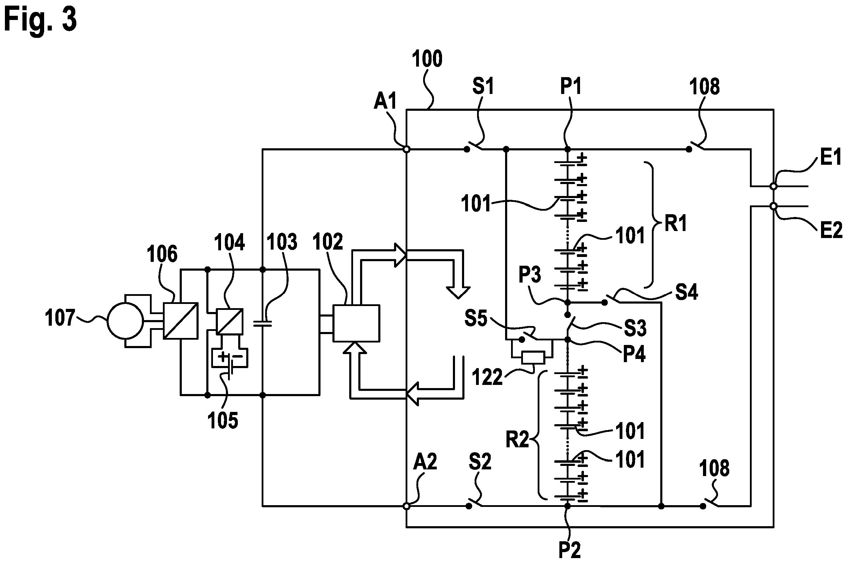

In Fig. 3 ist ein Beispiel einer Schaltungsanordnung für ein Energiespeichersystem 100 außerhalb des Schutzanspruches dargestellt.

Das Energiespeichersystem 100 weist eine erste Energiespeichereinheit R1 und eine zweiten Energiespeichereinheit R2 auf, die jeweils zumindest zwei in Reihe geschaltete Energiespeicherzellen 101 aufweisen. Die jeweilige Energiespeichereinheit (R1, R2) kann auch eine Kombination von Energiespeicherzellen 101 in Reihenschaltung und Parallelschaltung oder eine Parallelschaltung von Energiespeicherzellen 101 aufweisen.

Jede Energiespeichereinheit (R1, R2) weist jeweils einen ersten, insbesondere positiven, Polanschluss (P1, P4) und einen zweiten, insbesondere negativen, Polanschluss (P3, P2) auf.

Das Energiespeichersystem 100 ist mittels eines ersten Eingangs E1 und eines zweiten Eingangs E2 mit einer in den Figuren nicht dargestellten Gleichspannungsquelle elektrisch leitend verbindbar. Zwischen dem ersten Eingang E1 und dem ersten Polanschluss P1 der ersten Energiespeichereinheit R1 ist ein siebtes Schaltelement 108 angeordnet. Zwischen dem zweiten Eingang E2 und dem zweiten Polanschluss P2 der zweiten Energiespeichereinheit R2 ist ein weiteres siebtes Schaltelement 108 angeordnet. Über das jeweilige siebte Schaltelement 108 sind ist der jeweilige Polanschluss (P1, P2) und der jeweilige Eingang (E1, E2) elektrisch leitend miteinander verbindbar zum Laden des Energiespeichersystems 100.

Die Energiespeichereinheiten (R1, R2) sind mittels eines dritten Schaltelements (S3) in Reihe schaltbar. Dazu ist das dritte Schaltelement (S3) zwischen dem zweiten Polanschluss P3 der ersten Energiespeichereinheit R1 und dem ersten Polanschluss E4 der zweiten Energiespeichereinheit R2 angeordnet. Dadurch sind der zweite Polanschluss der ersten Energiespeichereinheit P3 und der erste Polanschluss P4 der zweiten Energiespeichereinheit R2 elektrisch leitend verbindbar.

Zur Parallelschaltung der Energiespeichereinheiten (R1, R2) weist die Schaltungsanordnung ein viertes Schaltelement S4 und ein fünftes Schaltelement S5 auf. Mittels des vierten Schaltelements S4 ist der erste Polanschluss P1 der ersten Energiespeichereinheit R1 mit dem ersten Polanschluss P4 der zweiten Energiespeichereinheit R2 verbindbar. Mittels des fünften Schaltelements S5 ist der zweite Polanschluss P3 der ersten Energiespeichereinheit R1 mit dem zweiten Polanschluss P2 der zweiten Energiespeichereinheit R2 verbindbar.

Der erste Polanschluss P1 der ersten Energiespeichereinheit R1 ist mittels eines ersten Schaltelements S1 mit einem ersten Ausgang A1 des Energiespeichersystems 100 elektrisch leitend verbindbar. Der zweite Polanschluss P2 der zweiten Energiespeichereinheit R2 ist mittels eines zweiten Schaltelements S2 mit einem zweiten Ausgang A2 des Energiespeichersystems 100 elektrisch leitend verbindbar.

Die Schaltungsanordnung weist zumindest eine Vorladeschaltung 122 auf, die parallel geschaltet zu dem fünften Schaltelement S5 angeordnet ist. Alternativ oder zusätzlich ist eine weitere nicht dargestellte Vorladeschaltung parallel geschaltet zu dem vierten Schaltelement S4 angeordnet.

Zum Laden der Energiespeichereinheiten (R1, R2) in Parallelschaltung ist das dritte Schaltelement S3 geöffnet und das vierte und fünfte Schaltelement (S4, S5) und die siebten Schaltelemente S7 sind geschlossen. Um während des Ladevorganges Verbraucher, die mit den Ausgängen (A1, A2) des Batteriesystems jeweils elektrisch leitend verbunden sind, mit Energie versorgen zu können, können das erste und zweite Schaltelement (S1, S2) geschlossen werden. Jedoch werden diese Komponenten dann nur mit der Hälfte der normalen Betriebsspannung betrieben.

Zum Laden der Energiespeichereinheiten (R1, R2) in Reihenschaltung sind das dritte Schaltelement S3 und die siebten Schaltelemente S7 geschlossen und das vierte und fünfte Schaltelement (S4, S5) sind geöffnet. Um während des Ladevorganges Verbraucher, die mit den Ausgängen (A1, A2) des Batteriesystems jeweils elektrisch leitend verbunden sind, mit Energie versorgen zu können, können das erste und zweite Schaltelement (S1, S2) geschlossen werden.

Dabei ist bei Herstellung der Reihenschaltung darauf zu achten, dass zuerst das vierte Schaltelement S4 und das fünfte Schaltelement S5 geöffnet werden, bevor das dritte Schaltelement S3 geschlossen wird, um einen Kurzschluss zu vermeiden. Dies kann bei mechanischen Schalteinrichtungen, beispielsweise Schützen, durch eine gemeinsame mechanische Kopplung des vierten Schaltelementes S4, des fünften Schaltelementes S5 und des dritten Schaltelementes S3 erfolgen mit entsprechendem Nacheilen des Schließens des dritten Schaltelementes S3 oder bei elektronischen Schalteinrichtungen, beispielsweise MOSFETs oder IGBTs, sowie bei nicht gekoppelten elektromechanischen Schalteinrichtungen durch eine entsprechende Veto-Beschaltung der Ansteuerung beziehungsweise durch entsprechend abgesicherte Softwarefunktionen in einer die Schalteinrichtung kontrollierenden, hier nicht dargestellten elektronischen Einheit.

Die Schaltungsanordnung für ein Energiespeichersystem 100 ist beispielsweise für einen Elektromotor eines Fahrzeugs verwendbar. Dazu sind die Ausgänge (A1, A2) des Energiespeichersystems 100 mit einem Zwischenkreiskondensator 103 verbunden. Der Zwischenkreiskondensator 103 speist einen Umrichter 106, der eine Wechselspannung für den Elektromotor erzeugt. Parallel geschaltet zu dem Zwischenkreiskondensator 103 ist ein weiterer Gleichspannungswandler 104 anordenbar, der eine Niederspannung, insbesondere 12 V oder 48 V, für ein Fahrzeugbordnetz 105 erzeugt, mit dem weitere elektrische Komponenten des Fahrzeugs betreibbar sind.

Aus dem Zwischenkreiskondensator 103 ist eine Kühlvorrichtung 102 für das Energiespeichersystem 100 speisbar, die parallel geschaltet zu dem Zwischenkreiskondensator 103 angeordnet ist.

Die beschriebene Verwendung einer Schaltungsanordnung für ein Energiespeichersystem 100 ist auch in der Energietechnik möglich, beispielsweise in der Windenergietechnik oder Solarenergietechnik oder Wasserkraftenergietechnik.

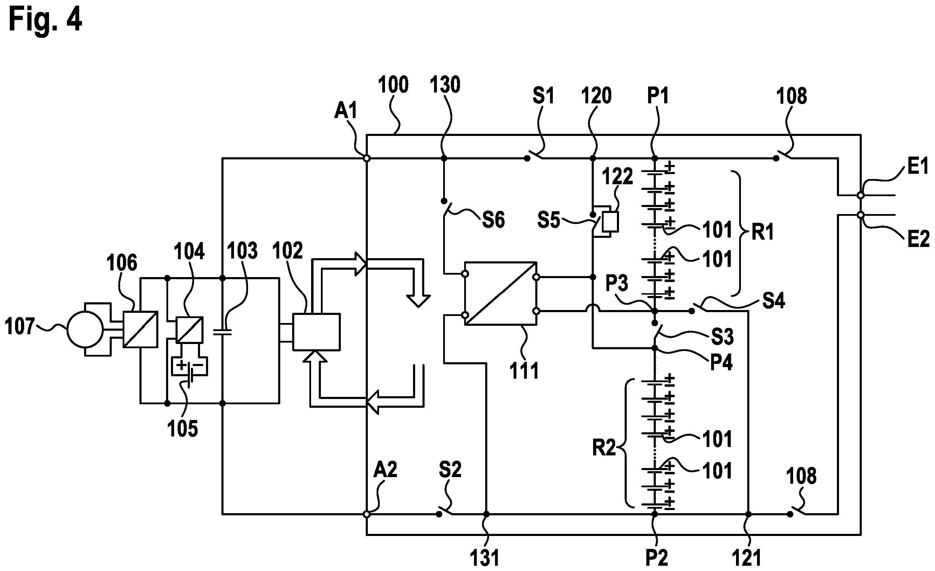

In Fig. 4 ist eine Ausführungsform der erfindungsgemäßen Schaltungsanordnung dargestellt.

Die Ausführungsform gemäß Fig. 4 weist zusätzlich zu dem Beispiel gemäß Fig. 3 einen Gleichspannungswandler 111 und ein sechstes Schaltelement S6 auf.

Der Gleichspannungswandler 111 ist beispielsweise zur Spannungsversorgung der Kühlvorrichtung 102 und/oder einer weiteren elektrischen Komponente, insbesondere Fahrzeugkomponente, während des Ladevorgangs bei Parallelschaltung der Energiespeichereinheiten verwendbar.

Der Gleichspannungswandler 111 ist mit einem ersten Eingangsanschluss mit dem zweiten Polanschluss P3 der ersten Energiespeichereinheit R1 und mit einem zweiten Eingangsanschluss mit dem ersten Polanschluss P4 der zweiten Energiespeichereinheit R2 elektrisch leitend verbunden. Das sechste Schaltelement S6 ist zwischen einem ersten Ausgangsanschluss des Gleichspannungswandlers 111 und dem ersten Ausgang A1 angeordnet. Ein zweiter Ausgangsanschluss des Gleichspannungswandlers 111 ist elektrisch leitend mit dem zweiten Schaltelement S2 verbunden, wobei das zweite Schaltelement S2 zwischen dem zweiten Ausgangsanschluss und dem zweiten Ausgang A2 angeordnet ist.

Die Eingangsanschlüsse des Gleichspannungswandlers 111 sind antiparallel geschaltet zu dem dritten Schaltelement S3 angeordnet.

Zur Verwendung des Gleichspannungswandlers 111 bei einer Parallelschaltung der Energiespeichereinheiten wird das erste und dritte Schaltelement (S1, S3) geöffnet und das zweite, vierte, fünfte und sechste Schaltelement (S2, S4, S5, S6) und die siebten Schaltelemente S7 werden geschlossen.

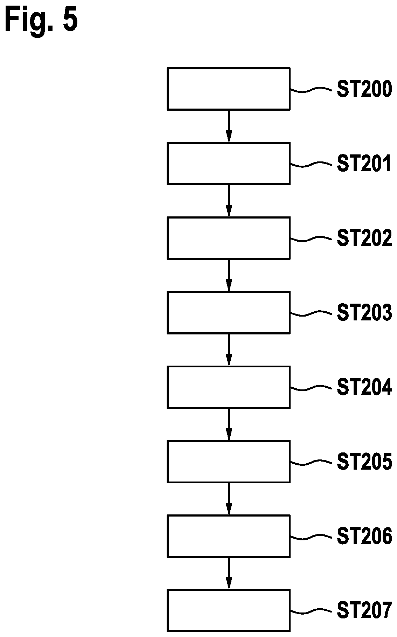

Figur 5 zeigt ein Flussdiagramm eines erfindungsgemäßen Ladeverfahrens für ein elektrisches Energiespeichersystem 100, aufweisend zumindest zwei Energiespeichereinheiten (R1, R2) und eine Schaltungsanordnung gemäß einem Ausführungsbeispiel mittels einer Gleichspannungsquelle. Die Ausgangsstellung aller Schaltelemente (S1, S2, S3, S4, S5, S6, S7) für die nachfolgende exemplarische Beschreibung ist dabei, dass alle Schaltelemente (S1, S2, S3, S4, S5, S6, S7) geöffnet sind.

Das Ladeverfahren weist die folgenden zeitlich aufeinander folgenden Verfahrensschritte auf:
In einem ersten Verfahrensschritt ST200 wird zumindest eine Eigenschaft der Gleichspannungsquelle, insbesondere die maximale Ladespannung der Gleichspannungsquelle, ermittelt.

In einem zweiten Verfahrensschritt ST201 wird zumindest eine Eigenschaft des Energiespeichersystems 100, insbesondere die maximale Ladespannung des Energiespeichersystems 100, ermittelt.

In einem dritten Verfahrensschritt ST202 wird die zumindest eine Eigenschaft der Gleichspannungsquelle mit der zumindest einen Eigenschaft des Energiespeichersystems 100 verglichen.

In einem vierten Verfahrensschritt ST203 wird mittels des Ergebnisses des dritten Verfahrensschrittes ST202 festgelegt, ob die Energiespeichereinheiten (R1, R2) in einer ersten Variante parallel oder in einer zweiten Variante in Reihe geschaltet geladen werden, insbesondere wobei die erste Variante, eine Parallelschaltung, gewählt wird, wenn die maximale Ladespannung des Energiespeichersystems 100 die maximale Ladespannung der Gleichspannungsquelle überschreitet.

In einem fünften Verfahrensschritt ST204 wird bei der ersten Variante zur Serienschaltung der Energiespeichereinheiten (R1, R2) ein drittes Schaltelement S3 geschlossen und ein viertes Schaltelement S4 und ein fünftes Schaltelement S5 werden geöffnet.

Bei der zweiten Variante zur Parallelschaltung der Energiespeichereinheiten (R1, R2) wird das dritte Schaltelement S3 im fünften Verfahrensschritt ST204 geöffnet, danach wird das vierte Schaltelement S4 geschlossen und innerhalb der jeweiligen Energiespeichereinheit (R1, R2) jeweils der Ladezustand von Speicherzellen 101 der jeweiligen Energiespeichereinheit (R1, R2) mittels der Vorladeschaltung 122 ausgeglichen und dann wird das fünfte Schaltelement S5 geschlossen.

In einem sechsten Verfahrensschritt ST205 werden zwei siebte Schaltelemente 108 geschlossen um einen ersten Polanschluss P1 der ersten Energiespeichereinheit R1 mit einem ersten Eingang E1 der Schaltungsanordnung zu verbinden und einen zweiten Polanschluss P2 der zweiten Energiespeichereinheit R2 mit einem zweiten Eingang E2 der Schaltungsanordnung zu verbinden. Danach wird die Energiezufuhr von der an den ersten Polanschluss P1 und den zweiten Polanschluss P2 angeschlossenen Gleichspannungsquelle an die Energiespeichereinheiten (R1, R2) gestartet wird.

In einem siebten Verfahrensschritt ST206 werden die Ladezustände der Energiespeichereinheiten (R1, R2) überwacht.

Sobald der gewünschte Ladezustand der Energiespeichereinheiten (R1, R2) erreicht wurde, wir in einem achten Verfahrensschritt ST207 der Ladevorgang beendet durch Öffnen der beiden siebten Schaltelemente 108 und gegebenenfalls Schließen des dritten Schaltelements S3 und Öffnen des vierten und fünften Schaltelements (S4, S5), so dass die Energiespeichereinheiten (R1, R2) in Serie geschaltet werden.

In einem alternativen Ladeverfahren wird nach dem fünften Verfahrensschritt ein sechstes Schaltelement S6 geschlossen und das erste Schaltelement S1 bleibt im sechsten Verfahrensschritt geöffnet, um einen Gleichspannungswandler 111 mit der Gleichspannungsquelle zu verbinden.

## Patentansprüche

1. Schaltungsanordnung für ein elektrisches Energiespeichersystem (100) mit einer ersten Energiespeichereinheit (R1) und einer zweiten Energiespeichereinheit (R2), die jeweils einen ersten Polanschluss (P1, P4) und einen zweiten Polanschluss (P3, P2) aufweisen, aufweisend:
- mindestens einen ersten Eingang (E1) und einen zweiten Eingang (E2) zur elektrisch leitenden Verbindung mit einer Gleichspannungsquelle,
- mindestens einen ersten Ausgang (A1) und einen zweiten Ausgang (A2) zur elektrisch leitenden Verbindung mit zumindest einer elektrischen Komponente,
- ein erstes Schaltelement (S1), das zwischen dem ersten Polanschluss (P1) der ersten Energiespeichereinheit (R1) und dem ersten Ausgang (A1) angeordnet ist, wobei der erste Polanschluss (P1) der ersten Energiespeichereinheit (R1) elektrisch leitend mit einem ersten Anschluss des ersten Schaltelements (S1) verbunden ist und der erste Ausgang (A1) elektrisch leitend mit einem zweiten Anschluss des ersten Schaltelements (S1) verbunden ist,
- ein zweites Schaltelement (S2), das zwischen dem zweiten Polanschluss (P2) der zweiten Energiespeichereinheit (R2) und dem zweiten Ausgang (A2) angeordnet ist, wobei der zweite Polanschluss (P2) der zweiten Energiespeichereinheit (R2) elektrisch leitend mit einem ersten Anschluss des zweiten Schaltelements (S2) verbunden ist und der zweite Ausgang (A2) elektrisch leitend mit einem zweiten Anschluss des zweiten Schaltelements (S2) verbunden ist,
wobei der erste Polanschluss (P1) der ersten Energiespeichereinheit (R1) mittels eines siebten Schaltelements (108) mit dem ersten Eingang (E1) elektrisch leitend verbindbar ist und der zweite Polanschluss (P2) der zweiten Energiespeichereinheit (R2) mittels eines weiteren siebten Schaltelements (108) mit dem zweiten Eingang (E2) elektrisch leitend verbindbar ist,
wobei zwischen dem zweiten Polanschluss (P3) der ersten Energiespeichereinheit (R1) und dem ersten Polanschluss (P4) der zweiten Energiespeichereinheit (R2) ein drittes Schaltelement (S3) angeordnet ist, wobei der zweite Polanschluss (P3) der ersten Energiespeichereinheit (R1) elektrisch leitend mit einem ersten Anschluss des dritten Schaltelements (S3) verbunden ist und der erste Polanschluss (P4) der zweiten Energiespeichereinheit (R2) elektrisch leitend mit einem zweiten Anschluss des dritten Schaltelements (S3) verbunden ist,
wobei zwischen dem zweiten Polanschluss (P3) der ersten Energiespeichereinheit (R1) und dem zweiten Polanschluss (P2) der zweiten Energiespeichereinheit (R2) ein viertes Schaltelement (S4) angeordnet ist, wobei der zweite Polanschluss (P3) der ersten Energiespeichereinheit (R1) elektrisch leitend mit einem ersten Anschluss des vierten Schalterelements (S4) verbunden ist und der zweite Polanschluss (P2) der zweiten Energiespeichereinheit (R2) elektrisch leitend mit einem zweiten Anschluss des vierten Schaltelements (S4) verbunden ist,
wobei zwischen dem ersten Polanschluss (P1) der ersten Energiespeichereinheit (R1) und dem ersten Polanschluss (P4) der zweiten Energiespeichereinheit (R2) ein fünftes Schaltelement (S5) angeordnet ist, wobei der erste Polanschluss (P1) der ersten Energiespeichereinheit (R1) elektrisch leitend mit einem ersten Anschluss des fünften Schaltelements (S5) verbunden ist und der erste Polanschluss (P4) der zweiten Energiespeichereinheit (R2) elektrisch leitend mit einem zweiten Anschluss des fünften Schaltelements (S5) verbunden ist,
wobei die Energiespeichereinheiten (R1, R2) in Abhängigkeit von der Schalterstellung des dritten, vierten und fünften Schaltelements (S3, S4, S5) parallel oder in Reihe geschaltet sind,
**dadurch gekennzeichnet, dass**
die Schaltungsanordnung einen Gleichspannungswandler (111) und ein sechstes Schaltelement (S6) aufweist,
wobei ein erster Eingangsanschluss des Gleichspannungswandlers (111) elektrisch leitend mit dem zweiten Polanschluss (P3) der ersten Energiespeichereinheit (R1) verbunden ist, wobei ein zweiter Eingangsanschluss des Gleichspannungswandlers (111) elektrisch leitend mit dem ersten Polanschluss (P4) der zweiten Energiespeichereinheit (R2) verbunden ist,
wobei das sechste Schaltelement (S6) zwischen einem ersten Ausgangsanschluss des Gleichspannungswandlers (111) und dem ersten Ausgang (A1) angeordnet ist, wobei ein erster Anschluss des sechsten Schaltelements (S6) elektrisch leitend mit dem ersten Ausgangsanschluss des Gleichspannungswandlers (111) verbunden ist und ein zweiter Anschluss des sechsten Schaltelements (S6) elektrisch leitend mit dem ersten Ausgang (A1) verbunden ist,
wobei ein zweiter Ausgangsanschluss des Gleichspannungswandlers (111) elektrisch leitend mit dem ersten Anschluss des zweiten Schaltelementes (S2) verbunden ist.

2. Schaltungsanordnung nach Anspruch 1,
**dadurch gekennzeichnet, dass**
der erste und der zweite Eingangsanschluss des Gleichspannungswandlers (111) antiparallel geschaltet zum dritten Schaltelement (S3) angeordnet sind.

3. Ladeverfahren für ein elektrisches Energiespeichersystem (100), aufweisend zumindest zwei Energiespeichereinheiten (R1, R2) und eine Schaltungsanordnung nach einem der Ansprüche 1 bis 2, mittels einer Gleichspannungsquelle,
wobei das Ladeverfahren die zeitlich aufeinander folgenden Verfahrensschritte aufweist:
- wobei in einem ersten Verfahrensschritt (ST200) zumindest eine Eigenschaft der Gleichspannungsquelle ermittelt wird;
- wobei in einem zweiten Verfahrensschritt (ST201) zumindest eine Eigenschaft des Energiespeichersystems (100) ermittelt wird;
- wobei in einem dritten Verfahrensschritt (ST202) die zumindest eine Eigenschaft der Gleichspannungsquelle mit der zumindest einen Eigenschaft des Energiespeichersystems (100) verglichen wird;
- wobei in einem vierten Verfahrensschritt (ST203) mittels des Ergebnisses des dritten Verfahrensschrittes (ST202) festgelegt wird, ob die Energiespeichereinheiten (R1, R2) in einer ersten Variante parallel oder in einer zweiten Variante in Reihe geschaltet geladen werden;
- wobei in einem fünften Verfahrensschritt (ST204) bei der ersten Variante zur Reihenschaltung der Energiespeichereinheiten (R1, R2) ein drittes Schaltelement (S3) geschlossen wird und ein viertes Schaltelement (S4) und ein fünftes Schaltelement (S5) geöffnet werden;
wobei bei der zweiten Variante zur Parallelschaltung der Energiespeichereinheiten (R1, R2) das dritte Schaltelement (S3) geöffnet wird, danach wird das vierte Schaltelement (S4) geschlossen und innerhalb der jeweiligen Energiespeichereinheit (R1, R2) jeweils der Ladezustand von Speicherzellen (101) der jeweiligen Energiespeichereinheit (R1, R2) ausgeglichen und dann wird das fünfte Schaltelement (S5) geschlossen;
- wobei in einem sechsten Verfahrensschritt (ST205) zwei siebte Schaltelemente (108) geschlossen werden um einen ersten Polanschluss (P1) der ersten Energiespeichereinheit (R1) mit einem ersten Eingang (E1) der Schaltungsanordnung zu verbinden und einen zweiten Polanschluss (P2) der zweiten Energiespeichereinheit (R2) mit einem zweiten Eingang (E2) der Schaltungsanordnung zu verbinden und danach die Energiezufuhr von der an den ersten Polanschluss (P1) und den zweiten Polanschluss (P2) angeschlossenen Gleichspannungsquelle an die Energiespeichereinheiten (R1, R2) gestartet wird;
- wobei in einem siebten Verfahrensschritt (ST206) die Ladezustände der Energiespeichereinheiten (R1, R2) überwacht werden;
- wobei in einem achten Verfahrensschritt (ST207) der Ladevorgang beendet wird durch Öffnen der beiden siebten Schaltelemente (108) und gegebenenfalls Schließen des dritten Schaltelements (S3) und Öffnen des vierten und fünften Schaltelements (S4, S5), so dass die Energiespeichereinheiten (R1, R2) in Serie geschaltet werden.

4. Ladeverfahren nach Anspruch 3,
**dadurch gekennzeichnet, dass**
im ersten Verfahrensschritt (ST200) die maximale Ladespannung der Gleichspannungsquelle bestimmt wird,
wobei im zweiten Verfahrensschritt (ST201) die maximale Ladespannung des Energiespeichersystems (100) bestimmt wird,
wobei im vierten Verfahrensschritt (ST203) die erste Variante, eine Parallelschaltung, gewählt wird, wenn die maximale Spannung des Energiespeichersystems (100) die maximale Ladespannung der Gleichspannungsquelle überschreitet.

5. Ladeverfahren nach Anspruch 3 oder 4,
**dadurch gekennzeichnet, dass**
nach dem fünften Verfahrensschritt (ST204) ein sechstes Schaltelement (S6) geschlossen wird und das erste Schaltelement (S1) im sechsten Verfahrensschritt (ST205) geöffnet bleibt, um einen Gleichspannungswandler (111) mit der Gleichspannungsquelle zu verbinden.

6. Elektrisches Energiespeichersystem (100) mit mindestens zwei elektrischen Energiespeichereinheiten (R1, R2),
**dadurch gekennzeichnet, dass**
das elektrische Energiespeichersystem (100) eine Schaltungsanordnung gemäß einem der Ansprüche 1 bis 2 aufweist.

7. Verwendung einer Schaltungsanordnung gemäß einem der Ansprüche 1 bis 2 in einem elektrisch angetriebenen Fahrzeug oder in einem Hybridfahrzeug.

## Claims

1. Circuit arrangement for an electrical energy storage system (100) having a first energy storage unit (R1) and a second energy storage unit (R2), which each have a first pole connection (P1, P4) and a second pole connection (P3, P2), having:
― at least one first input (E1) and a second input (E2) for electrically conductive connection to a DC voltage source,
― at least one first output (A1) and a second output (A2) for electrically conductive connection to at least one electrical component,
― a first switching element (S1), which is arranged between the first pole connection (P1) of the first energy storage unit (R1) and the first output (A1), wherein the first pole connection (P1) of the first energy storage unit (R1) is electrically conductively connected to a first connection of the first switching element (S1), and the first output (A1) is electrically conductively connected to a second connection of the first switching element (S1),
― a second switching element (S2), which is arranged between the second pole connection (P2) of the second energy storage unit (R2) and the second output (A2), wherein the second pole connection (P2) of the second energy storage unit (R2) is electrically conductively connected to a first connection of the second switching element (S2), and the second output (A2) is electrically conductively connected to a second connection of the second switching element (S2),
wherein the first pole connection (P1) of the first energy storage unit (R1) is electrically conductively connectable to the first input (E1) by means of a seventh switching element (108), and the second pole connection (P2) of the second energy storage unit (R2) is electrically conductively connectable to the second input (E2) by means of a further seventh switching element (108),
wherein the second pole connection (P3) of the first energy storage unit (R1) and the first pole connection (P4) of the second energy storage unit (R2) have a third switching element (S3) arranged between them, wherein the second pole connection (P3) of the first energy storage unit (R1) is electrically conductively connected to a first connection of the third switching element (S3), and the first pole connection (P4) of the second energy storage unit (R2) is electrically conductively connected to a second connection of the third switching element (S3),
wherein the second pole connection (P3) of the first energy storage unit (R1) and the second pole connection (P2) of the second energy storage unit (R2) have a fourth switching element (S4) arranged between them, wherein the second pole connection (P3) of the first energy storage unit (R1) is electrically conductively connected to a first connection of the fourth switching element (S4), and the second pole connection (P2) of the second energy storage unit (R2) is electrically conductively connected to a second connection of the fourth switching element (S4),
wherein the first pole connection (P1) of the first energy storage unit (R1) and the first pole connection (P4) of the second energy storage unit (R2) have a fifth switching element (S5) arranged between them, wherein the first pole connection (P1) of the first energy storage unit (R1) is electrically conductively connected to a first connection of the fifth switching element (S5), and the first pole connection (P4) of the second energy storage unit (R2) is electrically conductively connected to a second connection of the fifth switching element (S5),
wherein the energy storage units (R1, R2) are connected in parallel or in series on the basis of the switch position of the third, fourth and fifth switching elements (S3, S4, S5), **characterized in that**
the circuit arrangement has a DC-DC voltage converter (111) and a sixth switching element (S6), wherein a first input connection of the DC-DC voltage converter (111) is electrically conductively connected to the second pole connection (P3) of the first energy storage unit (R1), wherein a second input connection of the DC-DC voltage converter (111) is electrically conductively connected to the first pole connection (P4) of the second energy storage unit (R2),
wherein the sixth switching element (S6) is arranged between a first output connection of the DC-DC voltage converter (111) and the first output (A1), wherein a first connection of the sixth switching element (S6) is electrically conductively connected to the first output connection of the DC-DC voltage converter (111), and a second connection of the sixth switching element (S6) is electrically conductively connected to the first output (A1), wherein a second output connection of the DC-DC voltage converter (111) is electrically conductively connected to the first connection of the second switching element (S2).

2. Circuit arrangement according to Claim 1, **characterized in that**
the first and second input connections of the DC-DC voltage converter (111) are arranged so as to be connected in antiparallel with the third switching element (S3).

3. Charging method for an electrical energy storage system (100), having
at least two energy storage units (R1, R2) and a circuit arrangement according to one of Claims 1 to 2, by means of a DC voltage source,
wherein the charging method has the temporally successive method steps:
― wherein a first method step (ST200) involves at least one property of the DC voltage source being ascertained;
― wherein a second method step (ST201) involves at least one property of the energy storage system (100) being ascertained;
― wherein a third method step (ST202) involves the at least one property of the DC voltage source being compared with the at least one property of the energy storage system (100);
― wherein a fourth method step (ST203) involves the result of the third method step (ST202) being used to stipulate whether the energy storage units (R1, R2) are charged in a manner connected in parallel in a first variant or in a manner connected in series in a second variant;
― wherein a fifth method step (ST204) involves a third switching element (S3) being closed and a fourth switching element (S4) and a fifth switching element (S5) being opened in the first variant in order to connect the energy storage units (R1, R2) in series;
wherein in the second variant, to connect the energy storage units (R1, R2) in parallel, the third switching element (S3) is opened, the fourth switching element (S4) is subsequently closed and the respective state of charge of storage cells (101) of the respective energy storage unit (R1, R2) is equalized within the respective energy storage unit (R1, R2) and then the fifth switching element (S5) is closed;
― wherein a sixth method step (ST205) involves two seventh switching elements (108) being closed in order to connect a first pole connection (P1) of the first energy storage unit (R1) to a first input (E1) of the circuit arrangement and to connect a second pole connection (P2) of the second energy storage unit (R2) to a second input (E2) of the circuit arrangement, and, subsequently, the supply of energy from the DC voltage source connected to the first pole connection (P1) and the second pole connection (P2) to the energy storage units (R1, R2) being started;
― wherein a seventh method step (ST206) involves the states of charge of the energy storage units (R1, R2) being monitored;
― wherein an eighth method step (ST207) involves the charging process being terminated by opening the two seventh switching elements (108) and if need be closing the third switching element (S3) and opening the fourth and fifth switching elements (S4, S5), so that the energy storage units (R1, R2) are connected in series.

4. Charging method according to Claim 3, **characterized in that**
the first method step (ST200) involves the maximum charging voltage of the DC voltage source being determined,
wherein the second method step (ST201) involves the maximum charging voltage of the energy storage system (100) being determined,
wherein the fourth method step (ST203) involves the first variant, a parallel connection, being chosen if the maximum voltage of the energy storage system (100) exceeds the maximum charging voltage of the DC voltage source.

5. Charging method according to Claim 3 or 4, **characterized in that**
the fifth method step (ST204) is followed by a sixth switching element (S6) being closed and, in the sixth method step (ST205), the first switching element (S1) remaining open in order to connect a DC-DC voltage converter (111) to the DC voltage source.

6. Electrical energy storage system (100) having at least two electrical energy storage units (R1, R2), **characterized in that**
the electrical energy storage system (100) has a circuit arrangement according to one of Claims 1 to 2.

7. Use of a circuit arrangement according to one of Claims 1 to 2 in an electrically driven vehicle or in a hybrid vehicle.

## Revendications

1. Arrangement de circuit pour un système d'accumulation d'énergie (100) électrique, comprenant une première unité d'accumulation d'énergie (R1) et une deuxième unité d'accumulation d'énergie (R2), lesquelles possèdent respectivement une première borne de pôle (P1, P4) et une deuxième borne de pôle (P3, P2), comprenant :
― au moins une première entrée (E1) et une deuxième entrée (E2) servant à une liaison électriquement conductrice avec une source de tension continue,
― au moins une première sortie (A1) et une deuxième sortie (A2) servant à une liaison électriquement conductrice avec au moins un composant électrique,
― un premier élément de commutation (S1), qui est disposé entre la première borne de pôle (P1) de la première unité d'accumulation d'énergie (R1) et la première sortie (A1),la première borne de pôle (P1) de la première unité d'accumulation d'énergie (R1) étant reliée de manière électriquement conductrice à une première borne du premier élément de commutation (S1) et la première sortie (A1) étant reliée de manière électriquement conductrice à une deuxième borne du premier élément de commutation (S1),
― un deuxième élément de commutation (S2), qui est disposé entre la deuxième borne de pôle (P2) de la deuxième unité d'accumulation d'énergie (R2) et la deuxième sortie (A2), la deuxième borne de pôle (P2) de la deuxième unité d'accumulation d'énergie (R2) étant reliée de manière électriquement conductrice à une première borne du deuxième élément de commutation (S2) et la deuxième sortie (A2) étant reliée de manière électriquement conductrice à une deuxième borne du deuxième élément de commutation (S2),
la première borne de pôle (P1) de la première unité d'accumulation d'énergie (R1) pouvant être reliée de manière électriquement conductrice au moyen d'un septième élément de commutation (108) à la première entrée (E1) et la deuxième borne de pôle (P2) de la deuxième unité d'accumulation d'énergie (R2) pouvant être reliée de manière électriquement conductrice au moyen d'un autre septième élément de commutation (108) à la deuxième entrée (E2),
un troisième élément de commutation (S3) étant disposé entre la deuxième borne de pôle (P3) de la première unité d'accumulation d'énergie (R1) et la première borne de pôle (P4) de la deuxième unité d'accumulation d'énergie (R2),
la deuxième borne de pôle (P3) de la première unité d'accumulation d'énergie (R1) étant reliée de manière électriquement conductrice à une première borne du troisième élément de commutation (S3) et la première borne de pôle (P4) de la deuxième unité d'accumulation d'énergie (R2) étant reliée de manière électriquement conductrice à une deuxième borne du troisième élément de commutation (S3),
un quatrième élément de commutation (S4) étant disposé entre la deuxième borne de pôle (P3) de la première unité d'accumulation d'énergie (R1) et la deuxième borne de pôle (P2) de la deuxième unité d'accumulation d'énergie (R2),
la deuxième borne de pôle (P3) de la première unité d'accumulation d'énergie (R1) étant reliée de manière électriquement conductrice à une première borne du quatrième élément de commutation (S4) et la deuxième borne de pôle (P2) de la deuxième unité d'accumulation d'énergie (R2) étant reliée de manière électriquement conductrice à une deuxième borne du quatrième élément de commutation (S4),
un cinquième élément de commutation (S5) étant disposé entre la première borne de pôle (P1) de la première unité d'accumulation d'énergie (R1) et la première borne de pôle (P4) de la deuxième unité d'accumulation d'énergie (R2),
la première borne de pôle (P1) de la première unité d'accumulation d'énergie (R1) étant reliée de manière électriquement conductrice à une première borne du cinquième élément de commutation (S5) et la première borne de pôle (P4) de la deuxième unité d'accumulation d'énergie (R2) étant reliée de manière électriquement conductrice à une deuxième borne du cinquième élément de commutation (S5),
les unités d'accumulation d'énergie (R1, R2) étant branchées en série ou en parallèle en fonction de la position de commutation des troisième, quatrième et cinquième éléments de commutation (S3, S4, S5),
**caractérisé en ce que**
l'arrangement de circuit possède un convertisseur de tension continue (111) et un sixième élément de commutation (S6),
une première borne d'entrée du convertisseur de tension continue (111) étant reliée de manière électriquement conductrice à la deuxième borne de pôle (P3) de la première unité d'accumulation d'énergie (R1), une deuxième borne d'entrée du convertisseur de tension continue (111) étant reliée de manière électriquement conductrice à la première borne de pôle (P4) de la deuxième unité d'accumulation d'énergie (R2),
le sixième élément de commutation (S6) étant disposé entre une première borne de sortie du convertisseur de tension continue (111) et la première sortie (A1),une première borne du sixième élément de commutation (S6) étant reliée de manière électriquement conductrice à la première borne de sortie du convertisseur de tension continue (111) et une deuxième borne du sixième élément de commutation (S6) étant reliée de manière électriquement conductrice à la première sortie (A1),
une deuxième borne de sortie du convertisseur de tension continue (111) étant reliée de manière électriquement conductrice à la première borne du deuxième élément de commutation (S2).

2. Arrangement de circuit selon la revendication 1, **caractérisé en ce que** la première et la deuxième borne d'entrée du convertisseur de tension continue (111) sont disposées branchées en tête-bêche par rapport au troisième élément de commutation (S3).

3. Procédé de charge pour un système d'accumulation d'énergie (100) électrique, comprenant au moins deux unités d'accumulation d'énergie (R1, R2) et un arrangement de circuit selon l'une des revendications 1 à 2, au moyen d'une source de tension continue,
le procédé de charge comprenant les étapes suivantes, exécutées chronologiquement :
― dans une première étape du procédé (ST200), au moins une propriété de la source de tension continue étant déterminée ;
― dans une deuxième étape du procédé (ST201), au moins une propriété du système d'accumulation d'énergie (100) étant déterminée ;
― dans une troisième étape du procédé (ST202), l'au moins une propriété de la source de tension continue étant comparée avec l'au moins une propriété du système d'accumulation d'énergie (100) ;
― dans une quatrième étape du procédé (ST203), une stipulation étant effectuée au moyen du résultat de la troisième étape du procédé (ST202) afin de spécifier si les unités d'accumulation d'énergie (R1, R2) sont chargées en étant branchées en parallèle dans une première variante ou en série dans une deuxième variante ;
― dans une cinquième étape du procédé (ST204), dans le cas de la première variante, en vue du branchement en série des unités d'accumulation d'énergie (R1, R2), un troisième élément de commutation (S3) étant fermé et un quatrième élément de commutation (S4) ainsi qu'un cinquième élément de commutation (S5) étant ouverts ;
dans le cas de la deuxième variante, en vue du branchement en parallèle des unités d'accumulation d'énergie (R1, R2), le troisième élément de commutation (S3) étant ouvert et ensuite le quatrième élément de commutation (S4) étant fermé et, à l'intérieur de l'unité d'accumulation d'énergie (R1, R2) respective, l'état de charge des cellules d'accumulation (101) de l'unité d'accumulation d'énergie (R1, R2) respective étant respectivement équilibré et ensuite le cinquième élément de commutation (S5) étant fermé ;
― dans une sixième étape du procédé (ST205), deux septièmes éléments de commutation (108) étant fermés afin de relier une première borne de pôle (P1) de la première unité d'accumulation d'énergie (R1) à une première entrée (E1) de l'arrangement de circuit et relier une deuxième borne de pôle (P2) de la deuxième unité d'accumulation d'énergie (R2) à une deuxième entrée (E2) de l'arrangement de circuit et ensuite l'amenée d'énergie depuis la source de tension continue raccordée à la première borne de pôle (P1) et à la deuxième borne de pôle (P2) aux unités d'accumulation d'énergie (R1, R2) étant démarrée ;
― dans une septième étape du procédé (ST206), les états de charge des unités d'accumulation d'énergie (R1, R2) étant surveillés ;
― dans une huitième étape du procédé (ST207), l'opération de charge étant stoppée en ouvrant les deux septièmes éléments de commutation (108) et éventuellement en fermant le troisième élément de commutation (S3) et en ouvrant les quatrième et cinquième éléments de commutation (S4, S5), de sorte que les unités d'accumulation d'énergie (R1, R2) sont branchées en série.

4. Procédé de charge selon la revendication 3, **caractérisé en ce que**
dans la première étape du procédé (ST200), la tension de charge maximale de la source de tension continue est déterminée,
dans la deuxième étape du procédé (ST201), la tension de charge maximale du système d'accumulation d'énergie (100) étant déterminée,
dans la quatrième étape du procédé (ST203), la première variante, un branchement en parallèle, étant sélectionnée lorsque la tension maximale du système d'accumulation d'énergie (100) dépasse la tension de charge maximale de la source de tension continue.

5. Procédé de charge selon la revendication 3 ou 4, **caractérisé en ce que**
après la cinquième étape du procédé (ST204), un sixième élément de commutation (S6) est fermé et le premier élément de commutation (S1) reste ouvert dans la sixième étape du procédé (ST205) afin de relier un convertisseur de tension continue (111) à la source de tension continue.

6. Système d'accumulation d'énergie (100) électrique comprenant au moins deux unités d'accumulation d'énergie (R1, R2) électriques, **caractérisé en ce que** le système d'accumulation d'énergie (100) électrique comprend un arrangement de circuit selon l'une des revendications 1 à 2.

7. Utilisation d'un arrangement de circuit selon l'une des revendications 1 à 2 dans un véhicule à propulsion électrique ou dans un véhicule hybride.
